# EUROPÄISCHE PATENTSCHRIFT

(11) **EP 3 724 511 B1**
(45) Veröffentlichungstag und Bekanntmachung des Hinweises auf die Patenterteilung: **22.03.2023**
(21) Anmeldenummer: 18826241.4
(22) Anmeldetag: 13.12.2018
(51) Int. Cl.: F04D 29/28

(54) **DIAGONALVENTILATORRAD MIT ERHÖHTER FESTIGKEIT**
DIAGONAL FAN WHEEL WITH INCREASED STRENGTH
ROUE DE VENTILATEUR DIAGONAL A RESISTANCE AMELIOREE

(30) Priorität: 13.12.2017 DE 102017011503; 13.12.2017 DE 102017011504
(43) Veröffentlichungstag der Anmeldung: 21.10.2020
(73) Patentinhaber: ebm-papst Mulfingen GmbH & Co. KG, 74673 Mulfingen (DE)
(72) Erfinder: GEBERT, Daniel, 74613 Öhringen (DE); HAAS, Werner, 78655 Dunningen (DE); LAUFER, Wolfgang, 78733 Aichhalden (DE); SIEGER, Tobias, 78187 Geisingen (DE); USSELMANN, Eugen, 78073 Bad Dürrheim (DE)
(74) Vertreter: Staeger & Sperling Partnerschaftsgesellschaft mbB
(86) Internationale Anmeldenummer: PCT/EP2018/084780
(87) Internationale Veröffentlichungsnummer: WO 2019/115703

(56) Entgegenhaltungen:
- EP-A1- 2 942 531
- DE-A1-102015 207 800
- US-A- 4 227 868
- US-A- 4 874 293

## Beschreibung

Die Erfindung betrifft ein Diagonalventilatorrad mit erhöhter Festigkeit. Die Erfindung betrifft insbesondere ein Diagonalventilatorrad mit erhöhter Drehfestigkeit, somit eine Radialfestigkeit bei hohen Drehzahlen.

Belüftungsanlagen werden häufig mit vergleichsweise niedrigtourigen Ventilatoren, auch Axialgebläse genannt, ausgestattet, welche mittels Propeller, auch Lüfterrad, Luftschraube oder Schaufelrad bezeichnet, betrieben werden. Diese Ventilatoren arbeiten schallarm und eignen sich daher besonders gut für Anwendungen, bei welchen ein geräuscharmer Betrieb erwünscht ist. In diversen Anwendungen sind jedoch hohe Drehzahlen erforderlich, womit sich hohe Anforderungen an die mechanische Festigkeit der Schaufelräder ergeben.

Ein Lüfter bzw. Ventilator enthält jeweils eine Mehrzahl von um eine Welle angeordnete Laufradflügel. An solche aufradflügel sind hohe Anforderungen gestellt. Hinsichtlich ihrer dynamisch-mechanischen Eigenschaften sollen die Ventilatoren im Drehzahlbereich von hohen Drehzahlen arbeiten können. Somit treten am Propellerflügel im Betrieb durch Zentrifugalkräfte verursachte Zugspannungen und durch die Luftförderung erzeugte Biegespannungen auf.

Aus der DE 102015118387 A1 ist ein Ventilatorrad ausgeführt als Diagonalventilatorrad, mit einer Vielzahl von um eine axiale Rotationsachse verteilten Ventilatorschaufeln, bekannt. Das Diagonalventilatorrad besitzt eine im Radialschnitt bogenförmigen Deckscheibe, die mit ihrer Unterseite zumindest abschnittsweise auf axialen Stirnseiten der Ventilatorschaufeln aufliegt und um die Rotationsachse eine Einlassöffnung aufweist, wobei die im Radialschnitt bogenförmige Deckscheibe einen radialen Innenabschnitt besitzt, in dem ein Tangentenwinkel gegenüber einer Radialebene des Ventilatorrades größer ist als 45°, und einen sich in radialer Richtung an den Innenabschnitt anschließenden Außenabschnitt aufweist, wobei im Innenabschnitt auf der der Unterseite gegenüberliegenden Oberseite der Deckscheibe mindestens ein von der Oberseite der Deckscheibe radial und axial vorstehendes Luftleitelement mit einer in Umfangsrichtung weisenden Leitfläche angeordnet ist.

Aus den Druckschriften EP 2 942 531 A1, DE 10 2015 207800A1 und der US 4 227 868 A sind Ventilatorenanordnungen bekannt, wobei speziell die EP 2 942 531 A1 einen gattungsgemäßen Diagonalventilator mit Deck- und Bodenscheibe zeigt.

Eine weitere Anforderung besteht darin, dass die Propellerflügel witterungsbeständig, insbesondere feuchte- und UV-beständig sein sollen. Die Temperaturbeständigkeit im Zusammenhang mit der mechanischen Festigkeit soll über einen weiten Temperaturbereich reichen.

Möglichst geringe Unwuchten sollen im Weiteren eine grosse Laufruhe und einen verschleissarmen sowie sparsamen Betrieb der Ventilatoren garantieren, wobei die Propellerflügel zwecks Energieeinsparung ein möglichst geringes Gewicht aufzuweisen haben, so dass typische Maßnahmen über zunehmende Materialstärke zur Erhöhung der Festigkeit unerwünscht sind.

Es ist bekannt, Ventilatorlaufräder aus faserverstärktem Kunststoff, bsp. aus glasfaserverstärktem Polyester oder Polyamid, herzustellen. Dazu werden die Propollerflügel mehrteilig, vorzugsweise zweiteilig als jeweils untere und obere Halbschalen mittels Handlamination in Aussenformen gefertigt. Die beiden Halbschalen werden danach z. B. unter Ausbildung einer Hohlkammer mittels Kleben und Überlaminieren der Fügenaht zu einem Propellerffügel gefügt.

Diese Technik weist den Nachteil auf, dass die Wanddicken sowie der Fasergehalt durch die Handlamination nicht genau reproduzierbar sind. Die Folge sind Gewichtsunterschiede zwischen den einzelnen Propollerflügeln, was zu Unwuchten im Propeller führt, die wiederum durch aufwändige Massnahmen beseitigt werden müssen.

Weitere bekannte Verfahren zum Verbessern der Radialfestigkeit und der mechanischen Eigenschaften sind die geeignete Werkstoffwahl (höherwertiges Material), die Reduktion von Kerbwirkungen an Übergängen durch konstruktive Maßnahmen und der mehrteilige Aufbau. Diese bekannten Maßnahmen zeigen diverse Nachteile, die es zu vermeiden gilt.

Es ist daher Aufgabe der vorliegenden Erfindung, die bekannten Nachteile zu überwinden und eine Lösung für ein Diagonalventilator bzw. Diagonalventilatorrad bereitzustellen, die kostengünstig realisierbar ist und verbesserte mechanische Eigenschaften mit sich bringt, wodurch insbesondere eine erhöhte Radialfestigkeit für einen entsprechend damit ausgebildeten Ventilator erzielbar ist.

Diese Aufgabe wird durch ein Diagonalventilatorrad mit den Merkmalen von Anspruch 1 gelöst.

Eine erste Maßnahme zur Optimierung der mechanischen Eigenschaften ist es, das Laufrad einteilig herzustellen, wozu ein spezifisches Design verwendet wurde, welches sich auch bei den üblichen Herstellungsverfahren kostengünstig herstellen und zuverlässig aus dem Werkzeug entformen lässt. Eine weitere bevorzugte Maßnahme zur Verbesserung der im Stand der Technik bekannten Lösungen ist darin zu sehen, die Deckscheibe mit einer spezifischen Form auszubilden und insbesondere eine zylinderförmige Kontur der Deckscheibe vorzusehen, welche in einen sich daran anschließenden konischen Abschnitt übergeht, wobei der Übergang vom zylindrischen Abschnitt in den konischen Abschnitt nicht diskret, sondern kontinuierlich über eine gekrümmte, vorzugsweise mit einem bestimmten Radius ausgebildete Kontur vom zylindrischen Abschnitt in den konischen Abschnitt übergeht. Hierdurch wird eine Hut-artige Form erhalten, bei dem der konische Abschnitt von einem Verbindungsbereich vom Übergang vom zylindrischen Abschnitt in den konischen Abschnitt bis zu einem unteren Rand verläuft, welcher eine gedachte Ebene aufspannt, die unterhalb einer gedachten Ebene durch den oberen Randbereich der Bodenscheibe verläuft, so dass es zu einem Überlappbereich mit einem dazwischen liegenden Zwischenraum gibt in dem sich die Schaufeln S von der Außenseite der Bodenscheibe bis zur Innenseite der Deckscheibe erstrecken.

Eine weitere konstruktive Verbesserung wird darin gesehen, dass die Bodenscheibe des Laufrads im Wesentlichen konisch ausgebildet ist.

In einer weiteren vorteilhaften Ausgestaltung der Erfindung ist vorgesehen, dass die Konstruktion des Laufrads so gestaltet ist, dass ein Differenzwinkel zwischen Deck- und Bodenscheibe in den konischen Bereichen mindestens >1° vorzugsweise >2° beträgt, wobei hierzu korrespondierende Positionen an der Deckscheibe und der Bodenscheibe als Referenz für den Differenzwinkel betrachtet werden.

Weiter vorteilhaft ist es, wenn die Kante K an der Schaufelvorderkante einer Schaufel und zwar an der Druckseite der Schaufel als scharfe Kante ausgebildet wird und der Übergang von der Druckseite zur Saugseite der Schaufel verrundet ausgebildet ist. Somit besitzt eine jede Schaufel sowohl eine scharfe als auch eine abgerundete Kante im Bereich des Lufteinlasses.

Erfindungsgemäß ist vorgesehen, dass die Innenfläche der Deckscheibe an der Schaufelanbindung in Richtung der Bodenscheibe gezogen ist, um die Festigkeit zu steigern und Turbulenzen zu reduzieren. Die Außenkontur bleibt dabei rotationssymmetrisch. Weiter ist es mit Vorteil vorgesehen das Laufrad und das Rotorgehäuse des Motors als ein einziges Teil, somit einstückig auszubilden. In das Kunststoffbauteil wird bevorzugt mindestens ein Metallteil eingeformt, vorzugsweise eingespritzt, wobei als Metallteil auch die Rotorglocke, ein Rückschlussring, die Motorwelle oder dergleichen vorgesehen werden kann. Hierdurch wird erreicht, dass verschiedene Funktionen in dem Laufrad vereint werden und insbesondere eine hohe Festigkeit gewährleistet ist.

In einer weiteren vorteilhaften Ausgestaltung der Erfindung kann vorgesehen sein, dass die Schaufeln in ihrem dreidimensional gekrümmten Verlauf eine spezifische Wanddickenverteilung aufweisen, die die Festigkeit verbessert. Hierzu können z. B. einzelne oder mehrere kontinuierliche und diskontinuierliche Wanddickenbereiche je Schaufel vorgesehen werden. Denkbar ist es,

Besonders vorteilhaft ist eine ausgestaltung, bei der die Dicke t der Schaufel in Strömungsrichtung betrachtet zwischen der Vorderkante und Hinterkante im Bereich zwischen 30% und 60% der maximalen Dicke beträgt. Die maximale Dicke t der Schaufel in Strömungsrichtung gesehen wird im nicht durch Radien verrundeten Bereich von der Bodenscheibe aus bis zur Deckscheibe betrachtet.

Andere vorteilhafte Weiterbildungen der Erfindung sind in den Unteransprüchen gekennzeichnet bzw. werden nachstehend zusammen mit der Beschreibung der bevorzugten Ausführung der Erfindung anhand der Figuren näher dargestellt.

Es zeigen:
- Fig. 1: eine perspektivische Ansicht eines Ausführungsbeispiels eines Diagonalventilatorrad,
- Fig. 2: eine weitere perspektivische Ansicht des Diagonalventilatorrads aus Figur 1,
- Fig. 3: eine Ansicht, die den Zusammenhang der maximalen Materialstärke der Schaufel in Strömungsrichtung betrachtet entlang der Schaufel beginnend von der Bodenscheibe bis zur Deckscheibe und
- Fig. 4: eine perspektivische Unteransicht des Diagonalventilatorrads mit Darstellung der Positionen zwischen denen sich die maximale Materialstärke verändert.

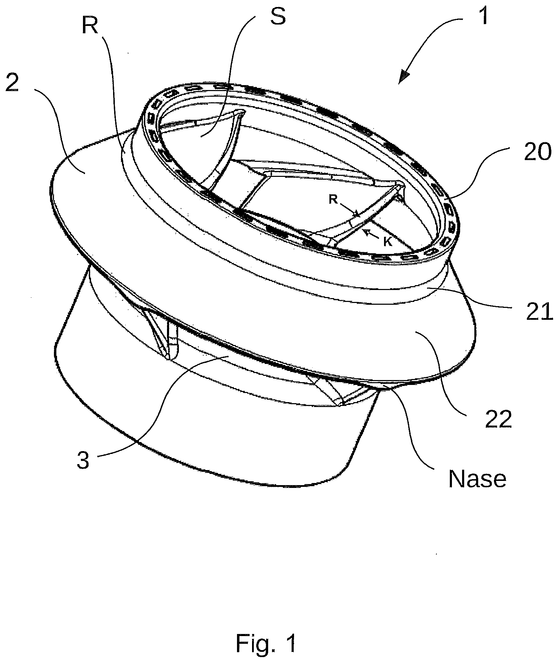

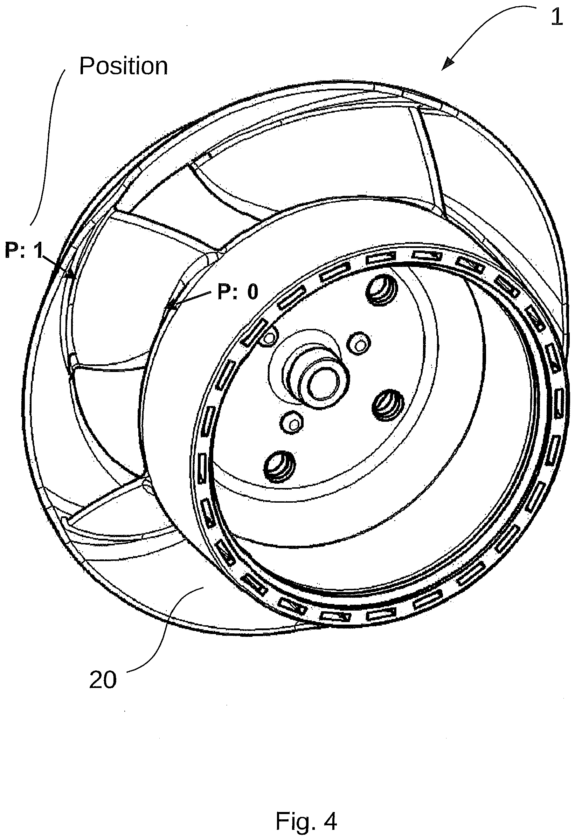

Im Folgenden wird die Erfindung anhand eines Ausführungsbeispiels mit Bezug auf die Figuren 1 bis 4 näher erläutert, wobei gleiche Bezugszeichen auf gleiche funktionale und/oder strukturelle Merkmale hinweisen.

Die Fig. 1 zeigt eine perspektivische Ansicht eines Ausführungsbeispiels eines Diagonalventilatorrads 1. Die Deckscheibe 2 des Ventilatorrads 1 ist mit einer spezifischen Form ausgebildet und zwar als eine zylinderförmige Kontur 20 im oberen Bereich. Dieser zylindrische Bereich 20 geht in einen sich daran anschließenden konischen Abschnitt 22 über, wobei der Übergang 21 vom zylindrischen Abschnitt 20 in den konischen Abschnitt 22 nicht diskret, sondern kontinuierlich über eine gekrümmte, mit einem bestimmten Radius R ausgebildete Kontur übergeht. Die so gebildete Hut-artige Form ist demnach so gestaltet, dass der konische Abschnitt von einem Verbindungsbereich (Radius R) vom Übergang vom zylindrischen Abschnitt 20 in den konischen Abschnitt 22 bis zu einem unteren Rand 24 verläuft, welcher eine gedachte Ebene aufspannt, die unterhalb einer gedachten Ebene durch den oberen Randbereich der Bodenscheibe verläuft, so dass es zu einem Überlappbereich mit einem dazwischen liegenden Zwischenraum gibt, in dem sich die Schaufeln S von der Außenseite der Bodenscheibe 3 bis zur Innenseite der Deckscheibe 2 erstrecken.

Wie weiter in der Figur 1 ersichtlich, kann der zylindrische Abschnitt aus einer Wandkonstruktion gebildet sein, in der eine Vielzahl von Hohlkammern vorgesehen sind.

Ferner ist in der Figur 1 zu erkennen, dass die Bodenscheibe 3 des Laufrads 1 im Wesentlichen konisch ausgebildet ist und somit einen konischen Bereich 30 ausbildet. An den konischen Bereich der Bodenscheibe 3 schließt sich ein zylindrischer Abschnitt an, der ebenfalls wie die Deckscheibe 2 aus einer Wandkonstruktion gebildet sein kann, in der eine Vielzahl von Hohlkammern vorgesehen sind.

Die Konstruktion des Laufrads 1 ist so gestaltet, dass ein Differenzwinkel (der Tangenten an den konischen Bereich) zwischen Deck- und Bodenscheibe 2, 3 in den konischen Bereichen 22, 30 mindestens >1° vorzugsweise >2° beträgt. Das bedeutet, dass der Anstellwinkel des konischen Bereiches der Deckscheibe 22 sich um mindestens 1° gegenüber dem Anstellwinkel des konischen Bereichs 30 der Bodenscheibe 3 unterscheidet. Dabei ist mit Vorteil vorgesehen, dass sich der Anstellwinkel (Winkel zwischen der Tangente an den konischen Bereich) und der zentralen Zylinderachse durch den zylindrischen Bereich der Deckscheibe größer ist als der Ansellwinkel des konischen Bereichs der Bodenscheibe. So kann der Anstellwinkel der Deckscheibe z. B. 46 ° - 60° betragen, während der Ansellwinkel der Bodenscheibe zwischen 30° und 45° liegt.

Die Kante K an der Schaufelvorderkante an der Druckseite der Schaufel S ist als scharfe Kante ausgebildet, während der Übergang R von der Druckseite zur Saugseite der Schaufel S verrundet (mit einem Radius R) ausgebildet ist (siehe hierzu die Details in Figur 1)

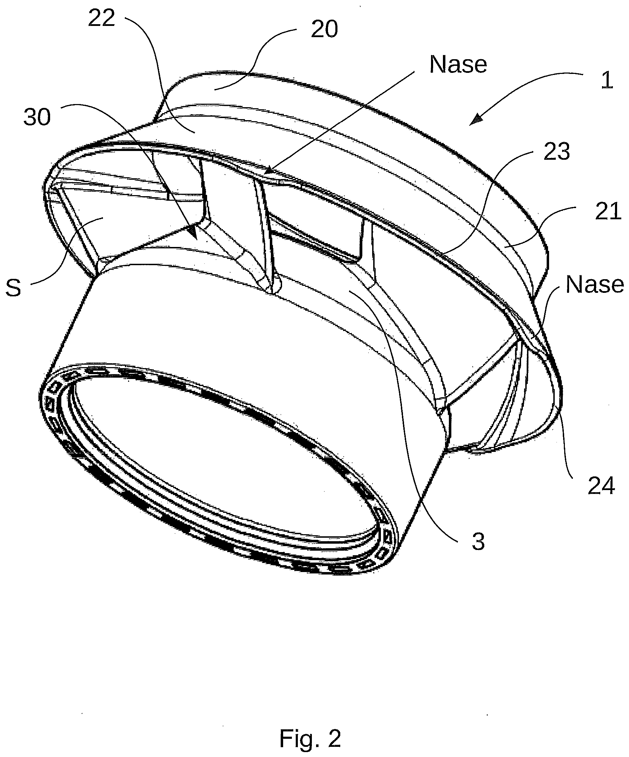

Die Innenfläche der Deckscheibe 2 an der Schaufelanbindung 23 in Richtung der Bodenscheibe 3 ist gezogen ausgebildet, so dass eine gezogene, über die ansonsten auf einer Kreislinie liegende Kante 24 hervorstendende Nase ausgebildet wird, um die Festigkeit zu steigern und Turbulenzen zu reduzieren. Die Außenkontur bleibt dabei rotationssymmetrisch, wie dies in der Ansicht der Figur 2 zu erkennen ist. Die Nasen können alternativ auch an diskreten Positionen entlang der Kante 24 angeordnet sein. Die Nasen sind dabei so geformt, dass deren Deckfläche d. h. Oberseite in Verlängerung der konischen Deckscheibe gebildet sind und demnach unter dem gleichen Anstellwinkel wie die Deckscheibe orientiert sind. Damit verläuft eine Tangente an der Oberfläche der Deckscheibe auch als Tangente im Bereich der Nase.

Der Kantenverlauf der Kante 24 im Bereich der Nase(n) entspricht einer Guasschen Glockenkurve, die sich asymtotisch mit ihren Flanken stetig (d. h ohne Knick) oder sprunkhafte Änderung in die Kante 24 hinein verläuft.

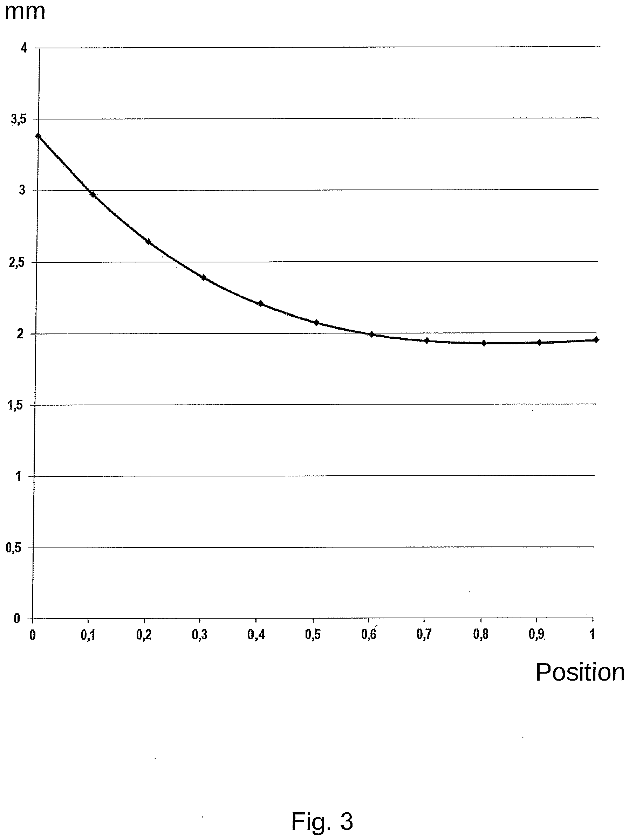

Die Schaufeln S weisen in ihrem dreidimensional gekrümmten Verlauf eine spezifische, sich kontinuierlich ändernde Wanddickenverteilung auf, die in der Figur 3 dargestellt ist. Dieser Wanddickenverlauf zwischen den Positionen P=0 (Anbindung an der Bodenscheibe 3) und P=1 (Anbindung an der Deckscheibe 2) erhöht die Festigkeit des Radialventilatorrads 1. Die maximale Wandstärke beträgt etwa 3,4 mm im Bereich der Anbindung an der Bodenscheibe 3 und nimmt dann kontinuierlich nichtlinear bis zur Deckscheibe 2 hin ab, wo die maximale Dicke ca. 2 mm beträgt.

Bevorzugt ist der Wanddickenverlauf an der äußeren d.h. außenliegenden Kante erfasst und kann im Bereich näher zum Zentrum hin (bedingt durch die unterschiedlichen Abstände zwischen Bodenscheibe und Deckscheibe) anders abnehmen. Grundsätzlich nimmt aber die Wanddicke der jeweiligen Schaufel S von der Bodenscheibe zur Deckscheibe hin ab. Denkbar ist es auch, dass eine oder mehrere Schaufeln einen jeweils unterschiedlichen Wanddickenverlauf aufweisen, wobei auf eine rotationssymmetrische Ausführung zu achten ist.

Die Erfindung beschränkt sich in ihrer Ausführung nicht auf die vorstehend angegebenen bevorzugten Ausführungsbeispiele. Vielmehr ist eine Anzahl von Varianten denkbar, welche von der dargestellten Lösung auch bei grundsätzlich anders gearteten Ausführungen Gebrauch macht. Der Schutzumfang der Erfindung ist durch die beigefügten Ansprüche definiert.

## Patentansprüche

1. Diagonalventilatorrad (1) aufweisend eine Deckscheibe (2) und eine Bodenscheibe (3), zwischen denen mehrere dreidimensional gekrümmte Schaufeln (S) angeordnet sind oder verlaufen, wobei die Schaufeln (S) materialschlüssig mit der Bodenscheibe (3) und der Deckscheibe (2) verbunden sind, **dadurch gekennzeichnet, dass** die Innenfläche der Deckscheibe (2) an der Schaufelanbindung (23) in Richtung der Bodenscheibe (3) an mehreren Positionen gezogen ausgebildet ist, so dass je eine gezogene, über die ansonsten auf einer Kreislinie liegende Kante (24) hervorstendende Nase an der Kante (24) ausgebildet ist.

2. Diagonalventilatorrad (1) nach Anspruch 1, **dadurch gekennzeichnet, dass** dieser sowohl einstückig als auch einteilig ausgebildet ist.

3. Diagonalventilatorrad (1) nach Anspruch 1 oder 2, **dadurch gekennzeichnet, dass** die Deckscheibe (2) des Diagonalventilatorrads (1) mit einer spezifischen Form ausgebildet ist und zwar mit einer zylinderförmigen Kontur (20) an die sich ein konischer Abschnitt (22) anschließt, wobei der Übergang (21) vom zylindrischen Abschnitt (20) in den konischen Abschnitt (22) nicht diskret, sondern kontinuierlich über eine gekrümmte, mit einem vorbestimmten Radius R ausgebildete Kontur übergeht.

4. Diagonalventilatorrad (1) nach einem der vorhergehenden Ansprüche, **dadurch gekennzeichnet, dass** die Bodenscheibe (3) des Diagonalventilatorrad (1) im Wesentlichen konisch ausgebildet ist und somit einen konischen Bereich (30) ausbildet.

5. Diagonalventilatorrad (1) nach einem der vorhergehenden Ansprüche, **dadurch gekennzeichnet, dass** das Diagonalventilatorrad (1) so ausgebildet ist, dass ein Differenzwinkel einer jeweils an der jeweiligen Oberseite der Deck- und Bodenscheibe (2, 3) anliegenden Tangente zwischen der Deck- und Bodenscheibe (2, 3) in den konischen Bereichen (22, 30) mindestens >1° (größer 1°) vorzugsweise >2° (größer 2°) beträgt.

6. Diagonalventilatorrad (1) nach einem der vorhergehenden Ansprüche, **dadurch gekennzeichnet, dass** die Kante (K) an der Schaufelvorderkante an der Druckseite der Schaufel (S) jeweils als scharfe Kante ausgebildet ist, während der Übergang (R) von der Druckseite zur Saugseite der Schaufel (S) verrundet, d. h. mit einem abgerundeten Kantenbereich ausgebildet ist.

7. Diagonalventilatorrad (1) nach einem der vorhergehenden Ansprüche, **dadurch gekennzeichnet, dass** die Außenkontur der Deckscheibe (2) rotationssymmetrisch ist.

8. Diagonalventilatorrad (1) nach einem der vorhergehenden Ansprüche, **dadurch gekennzeichnet, dass** die Schaufeln (S) in ihrem dreidimensional gekrümmten Verlauf eine spezifische, sich kontinuierlich ändernde Wanddickenverteilung aufweisen.

## Claims

1. A diagonal fan wheel (1), comprising a cover disk (2) and a bottom disk (3), between which multiple three-dimensionally curved blades (S) are disposed or extend, wherein the blades (S) are connected to the bottom disk (3) and the cover disk (2) in a materially bonded manner, **characterized in that** the inner surface of the cover disk (2) is configured drawn towards the bottom disk (3) at the blade attachment (23), preferably at multiple positions, such that a drawn nose projecting from the edge (24) otherwise extending on a circular line is formed on the edge (24).

2. The diagonal fan wheel (1) according to claim 1, **characterized in that** it is designed both integrally and in one part.

3. The diagonal fan wheel (1) according to claim 1 or 2, **characterized in that** the cover disk (2) of the diagonal fan wheel (1) is formed in a specific shape, namely a cylindrical contour (20) adjoined by a conical section (22), wherein the transition (21) from the cylindrical section (20) into the conical section (22) is not discrete, but transitions continuously via a curved contour having a predetermined radius R.

4. The diagonal fan wheel (1) according to any one of the preceding claims, **characterized in that** the bottom disk (3) of the diagonal fan wheel (1) is substantially conical and thus forms a conical region (30).

5. The diagonal fan wheel (1) according to any one of the preceding claims, **characterized in that** the diagonal fan wheel (1) is configured such that a differential angle of a tangent placed on the respective upper surface of the cover and bottom disks (2, 3) between the cover and the bottom disks (2,3) is at least >1° (greater than 1°), preferably >2° (greater than 2°) in the conical regions (22, 30).

6. The diagonal fan wheel (1) according to any one of the preceding claims, **characterized in that** the edge (K) on the blade front edge on the pressure side of the blade (S) is configured as a sharp edge, while the transition (R) from the pressure side to the suction side of the blade (S) is rounded, i.e., formed with a rounded edge region.

7. The diagonal fan wheel (1) according to any one of the preceding claims, **characterized in that** the outer contour of the cover disk (2) is rotationally symmetrical.

8. The diagonal fan wheel (1) according to any one of the preceding claims, **characterized in that** the blades (S) have a specific continuously changing wall thickness distribution in their three-dimensionally curved extension.

## Revendications

1. Roue de soufflante diagonale (1) présentant une plaque de recouvrement (2) et une plaque de base (3), entre lesquelles sont disposées ou s'étendent plusieurs pales (S) courbées en trois dimensions, dans laquelle les pales (S) sont reliées à la plaque de base (3) et à la plaque de recouvrement (2) par une liaison de matière, **caractérisée en ce que** la surface intérieure de la plaque de recouvrement (2) est réalisée de manière étirée en plusieurs positions au niveau de la liaison des pales (23) en direction de la plaque de base (3), de sorte qu'un nez étiré, dépassant de l'arête (24) située par ailleurs sur une ligne circulaire, est réalisé sur l'arête (24).

2. Roue de soufflante diagonale (1) selon la revendication 1, **caractérisée en ce qu'**elle est réalisée d'une seule pièce ainsi que d'un seul tenant.

3. Roue de soufflante diagonale (1) selon la revendication 1 ou 2, **caractérisée en ce que** la plaque de recouvrement (2) de la roue de soufflante diagonale (1) est réalisée avec une forme spécifique, à savoir avec une contour cylindrique (20) auquel fait suite un segment conique (22), dans laquelle la transition (21) du segment cylindrique (20) au segment conique (22) ne se fait pas de manière discrète mais de manière continue via une courbe avec un rayon prédéterminé R.

4. Roue de soufflante diagonale (1) selon l'une des revendications précédentes, **caractérisée en ce que** le disque de base (3) de la roue de soufflante diagonale (1) est essentiellement conique et forme ainsi une zone conique (30).

5. Roue de soufflante diagonale (1) selon l'une des revendications précédentes, **caractérisée en ce que** la roue de soufflante diagonale (1) est réalisée de sorte qu'un angle différentiel d'une tangente respective reposant sur le dessus de la plaque de recouvrement et de base (2, 3) entre la plaque de recouvrement et de base (2, 3) dans les sections coniques (22, 30) est au moins >1° (supérieur à 1°) de préférence >2° (supérieur à 2°).

6. Roue de soufflante diagonale (1) selon l'une des revendications précédentes, **caractérisée en ce que** l'arête (K) sur le bord avant de la pale sur le côté pression de la pale (S) est respectivement réalisée comme un bord tranchant, tandis que la transition (R) du côté pression au côté aspiration de la pale (S) est arrondie, c'est-à-dire réalisée avec une zone d'arête arrondie.

7. Roue de soufflante diagonale (1) selon l'une des revendications précédentes, **caractérisée en ce que** le contour extérieur de la plaque de recouvrement (2) est à symétrie de révolution.

8. Roue de soufflante diagonale (1) selon l'une des revendications précédentes, **caractérisée en ce que** les pales (S) présentent une répartition d'épaisseur de paroi spécifique, changeant en continu dans leur courbe tridimensionnelle.
